# EUROPEAN PATENT SPECIFICATION

(11) **EP 4 486 983 B1**
(45) Date of publication and mention of the grant of the patent: **08.10.2025**
(21) Application number: 24721590.8
(22) Date of filing: 22.04.2024
(51) Int. Cl.: F01N 3/08, F01N 3/20, F01N 3/28, F01N 5/04, F01N 13/10

(54) **EXHAUST GAS RECEIVER**
ABGASSAMMLER
COLLECTEUR DE GAZ D'ECHAPPEMENT

(30) Priority: 22.05.2023 EP 23174444
(43) Date of publication of application: 08.01.2025
(73) Proprietor: WinGD Ltd., 8400 Winterthur (CH)
(72) Inventor: SÖNNICHSEN, Samuel, 8405 Winterthur (CH)
(74) Representative: Hepp Wenger Ryffel AG
(86) International application number: PCT/EP2024/060884
(87) International publication number: WO 2024/240431

(56) References cited:
- DE-A1- 102015 201 185
- DE-A1- 102020 201 085
- JP-A- 2019 044 777
- US-B2- 9 915 186

## Description

The invention relates to an exhaust gas receiver for an internal combustion engine system and an internal combustion engine system.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

An exhaust gas receiver may be fluidly connected with a turbocharger while also being able to fluidly connect to some kind of after treatment.

All piping and valves for such fluid connections take up space and needs to be customised for each engine system, depending on which turbocharger and which arrangement of the turbocharger and the after treatment device is used.

DK201770739A1 proposes an internal combustion engine system with a guiding arrangement for controlling the exhaust gas prior to entering the turbocharger. The guiding arrangement comprises a first inlet in fluid communication with the exhaust gas receiver, a second inlet in fluid communication with a NOₓ reduction unit, an outlet in fluid communication with the turbocharger, a piping unit connecting the first inlet, the second inlet and the outlet. The guiding arrangement further comprises a bypass valve for closing and opening the first inlet, and a first reactor valve arranged in fluid communication with the second inlet for controlling passage of exhaust gas from the NOₓ reduction unit to the guiding arrangement. The first inlet, the valve element and a main part of the piping unit are arranged in the receiver housing. Further exhaust gas receivers for internal combustion engines are known from the following publications: DE 10 2020 201085 A1, DE 10 2015 201185 A1, JP 2019 044777 A or US 9 915 186 B2.

By incorporating the bypass valve and the main part of the piping unit for connecting the exhaust gas receiver and the turbocharger into the exhaust gas receiver, the overall space occupied by the internal combustion engine system is substantially minimised. However, when manufacturing, modifying and/or maintaining this kind of engine system complicated interventions may be required, which may increase work and costs for the engine designer/builder.

The invention is based on the task of providing an exhaust gas receiver and an internal combustion engine which avoid the disadvantages of the known, which, in particular, provide for an easy handling, a reduced size and a high stability.

The object is achieved by the characteristics of the independent claims.

According to the invention an exhaust gas receiver is an exhaust gas receiver for an internal combustion engine system.

The internal combustion engine comprises an internal combustion engine with at least one cylinder generating exhaust gas, a turbocharger and a NO_{X} reduction unit.

According to the invention the exhaust gas receiver comprises a receiver housing for receiving the exhaust gas.

The receiver housing of the exhaust gas receiver gas provides for receiving exhaust gas from the at least one cylinder. Fluctuating pressure generated from different cylinders may be equalized. The receiver housing has a longitudinal axis. The receiver housing typically has a cylindrical shape and preferably comprises at least one exhaust inlet, which is fluidly connected or connectable to a cylinder outlet.

The exhaust gas receiver comprises a guiding arrangement. The guiding arrangement provides for controlling the exhaust gas prior to entering the turbocharger.

The guiding arrangement comprises a first inlet for establishing a fluid communication with the receiver housing. A fluid communication allows a flow of gas.

The guiding arrangement comprises a second inlet for establishing a fluid communication with the NO_{X} reduction unit.

The guiding arrangement further comprises an outlet for establishing a fluid communication with the turbocharger.

The guiding arrangement further comprises a first piping unit connecting the first inlet, the second inlet and the outlet.

Hence, exhaust gas may be enabled to flow from the first inlet, thus from the receiver housing, and/or from the second inlet, thus from the NO_{X} reduction unit, to the outlet, thus to the turbocharger.

The first inlet may be arranged in a first pipe and/or the second inlet may be arranged in the second pipe, wherein the first and/or the second pipe are in fluid communication with the first pipe unit. The first and/or the second pipe may be connected to the first pipe unit.

Alternatively, the first inlet and/or the second inlet may be directly arranged in the first piping unit.

The exhaust gas receiver comprises a second piping unit for establishing a fluid communication between the NO_{X} reduction unit and the second inlet, which second piping unit is at least partly arranged in the receiver housing.

Preferably, the guiding arrangement and the receiver housing, the guiding arrangement and the second piping unit and/or the receiver housing and the second piping unit are each directly connected to each other. Within the context of this application a direct connection between the guiding arrangement and the second piping unit, between the guiding arrangement and the receiver housing and/or between the second piping unit and the receiver housing means that there are fixed connections and that no compensating elements are arranged in the connection. A direct connection may comprise a valve or a pipe.

Advantageously, a stable unit is formed by the guiding arrangement and the receiver housing, and, preferably, additionally by the second piping unit.

As the receiver housing typically is fixedly connected to the engine frame, variations in pressure and temperature will not cause severe vibrations in the guiding arrangement.

At the same time the guiding arrangement and the receiver housing for a compact unit which does not take much space in the engine room.

The guiding arrangement preferably is arranged below the receiver housing when mounted in an internal combustion engine system.

The guiding arrangement may comprise a bypass valve for closing and opening the first inlet.

The bypass valve preferably is arranged downstream the receiver housing and/or upstream the first inlet and may be arranged between the receiver housing and the first inlet. The bypass valve may alternatively be arranged in the first inlet or in the receiver housing.

The bypass valve may comprise a moveable and controllable valve element, for example may be a butterfly valve.

The bypass valve is easily accessible for operating, mounting, maintaining and exchange.

The guiding arrangement may further comprise a first reactor valve for closing and opening the second inlet.

The first reactor valve preferably is arranged downstream the second piping unit and/or upstream the second inlet and may be arranged between the second piping unit and the second inlet. As at least a part of the second piping unit is arranged within the receiver housing, the first reactor valve may also be arranged between the receiver housing and the second inlet. Preferably the first reactor valve is not arranged within the receiver housing. The first reactor valve, similar to the bypass valve, is easily accessible for operating, mounting, maintaining and exchange.

The first reactor valve may alternatively be arranged in the second piping unit or in the second inlet or in a second pipe.

The first reactor valve provides for controlling passage of exhaust gas from the NO_{X}-reduction unit to the first piping unit.

The first reactor valve may comprise a moveable and controllable valve element, for example may be a butterfly valve.

The bypass valve and the first reactor valve preferably are of the same type.

The first inlet may comprise a first inlet axis, preferably coinciding with the axis of a first pipe, and the second inlet may comprise a second inlet axis, preferably coinciding with the axis of a second pipe.

The first inlet axis is perpendicular to the opening area of the first inlet and the second inlet axis is perpendicular to the opening area of the second inlet.

A particularly stable design can be obtained, when the first inlet axis and the second inlet axis are arranged in parallel and preferably perpendicular to the longitudinal axis of the receiver housing. The first inlet axis and the second inlet axis may cross the longitudinal axis of the receiver housing and may coincide with a radial direction of the receiver housing.

The outlet may comprise an outlet axis, preferably coinciding with the longitudinal axis of the first piping unit, and the outlet axis may be arranged perpendicular to the first inlet axis and the second inlet axis.

The outlet axis and the longitudinal axis of the first piping unit preferably are parallel to the longitudinal axis of the receiver housing. Hence, as the receiver housing typically is arranged horizontally, the first piping unit may have a mainly horizontal orientation to reach a mainly horizontally arranged inlet of the turbocharger.

The first piping unit may form a straight connection to the inlet of the turbocharger.

A compact arrangement of the guiding arrangement and the receiver housing is thereby achieved.

The second piping unit may comprise an entering piping part, which enters the receiver housing, a crossing piping part, which is arranged in the receiver housing and a leaving piping part, which leaves the receiver housing. The leaving piping part may be fixed to the second inlet, to the second pipe or to the first reactor valve.

The entering piping part, the crossing piping part and the leaving piping part may be parts of a single pipe which may be fixed to the receiver housing, for example welded on.

The entering piping part may comprise an entering piping part axis and the leaving piping part may comprise and leaving piping part axis. The entering piping part axis and the leaving piping part axis may include an angle, which angle may be between 90° and 180°.

The crossing pipe be a straight pipe. In this case, the crossing pipe crosses the receiver housing on a straight way and the entering piping part axis and the leaving piping part axis include an angle of 180°.

Alternatively, the crossing pipe may be a curved pipe. The entering piping part may for example enter a lateral end of the receiver housing in an axial direction and the leaving piping part may leave the cylinder jacket of the receiver housing in a radial direction. In this case the entering piping part axis and the leaving piping part axis may include an angle of 90°.

In this case the entering piping part axis and the leaving piping part axis may also include an angle of 90° when the entering piping part for example enters the cylinder jacket of the receiver housing in a first radial direction and the leaving piping part leaves the cylinder jacket of the receiver housing in a second radial direction, wherein the first and the second radial direction include an angle of 90°.

The crossing piping part may run through the longitudinal axis of the receiver housing. The crossing piping part may partly run along the longitudinal axis or may cross the axis in an angle of 90°. The crossing piping part may go through the middle of the receiving housing, which arrangement provides for a symmetrical and stable arrangement.

The second piping unit, in particular the entering piping part as described above, may comprise a first compensating element. The compensation element may absorb any vibrations or dilatations due to temperature or pressure variations arising between the receiver housing and the NOx reduction unit. The first compensating element may decouple vibrations and variations in piping lengths from the receiver housing and from the guiding arrangement.

Alternatively, the second piping unit may be connected or connectable to a first compensating element being arranged between the second piping unit and the NOx reduction unit.

Preferably, the first compensating element may compensate for lengths variations of 0.5cm-20cm, preferably of 1cm-10cm.

The first piping unit may comprise a second compensating element which is arranged next to the outlet. The compensation element may absorb any vibrations or dilatations due to temperature or pressure variations arising in the turbocharger. The second compensating element may decouple vibrations and variations in piping lengths from the guiding arrangement and from the receiver housing.

Alternatively, the first piping unit may be connected or connectable to a second compensating element being arranged between the first piping unit and the turbocharger.

Preferably, the second compensating element may compensate for lengths variations of 0.5cm-20cm, preferably of 1cm-10cm.

Typically, the receiver housing may comprise a housing outlet for establishing a fluid communication with the NO_{X} reduction unit by an outlet pipe connected to the housing outlet. Exhaust gas may be guided from the receiver housing to the NO_{X} reduction unit through the housing outlet and through the outlet pipe.

A second reactor valve for closing and opening the housing outlet may be arranged in the housing outlet or in the outlet pipe.

The second reactor valve may comprise a moveable and controllable valve element, for example may be a butterfly valve.

Exhaust gas may be guided via the outlet to the NO_{X} reduction unit and/or via the first inlet of the guiding arrangement directly to the turbocharger.

The exhaust gas receiver may comprise a third compensating element, which is arranged downstream the housing outlet.

The third compensation element may absorb any vibrations or dilatations due to temperature or pressure variations arising in the NO_{X} reduction unit. The third compensating element may decouple vibrations and variations in piping lengths from the receiver housing.

Alternatively, the housing outlet or the housing pipe may be connected to a third compensating element being arranged downstream the receiver housing and upstream the NO_{X} reduction unit.

Preferably, the third compensating element may compensate for lengths variations of 0.5cm-20cm, preferably of 1cm-10cm.

The exhaust gas receiver comprising the receiver housing, the guiding arrangement and the second piping unit may be decoupled from any length variations arising in the NO_{X} reduction unit and in the turbocharger by the first, the second and the third compensating element.

The object is also achieved by an internal combustion engine system with an internal combustion engine and at least one exhaust gas receiver as described above. The internal combustion engine comprises at least one cylinder, a turbocharger and NO_{X} reduction unit.

Preferably the internal combustion engine is a large marine or ship engine or a stationary engine whose cylinders have an inner diameter of at least 200 mm. The engine preferably is a two-stroke engine or a two-stroke cross head engine.

The internal combustion engine system may comprise at least one compensating element, preferably a first, second and/or third compensating element as described above, arranged between the exhaust gas receiver and the turbocharger and/or between the exhaust gas receiver and the NO_{X} reduction unit.

The internal combustion engine system may comprise a flex connection connecting the receiver housing and/or the guiding arrangement to an engine frame.

The first piping unit may be mounted to the flex connection. The flex connection may provide for compensating vibrations caused by the turbocharger.

The turbocharger may be arranged on a driving end of the internal combustion engine system.

Engine applications with a turbocharger on a driving end side (so called "Aft End TC") are a common solution for smaller engines, comprising five or six cylinders. The internal combustion engine as described above allows for a high-pressure NO_{X} reducing unit arrangement, wherein the NO_{X} reducing unit is arranged upstream the turbocharger.

The internal combustion engine system may comprise a control unit for setting the first reactor valve, the second reactor valve and/or the bypass valve as described above for allowing exhaust gas to be guided to the turbocharger directly and/or via the NO_{X} reduction unit, depending on system-related, environmental and/or legal requirements.

Further advantageous aspects of the invention are explained in the following by means of exemplary embodiments and the figure. Functionally equal elements are provided with the same reference signs. In the drawing, in a schematic manner:
- Figure 1:: shows a schematic illustration of a first example of an internal combustion engine system in a side view;
- Figure 2:: shows a schematic illustration of a second example of an internal combustion engine system in a side view;
- Figure 3:: shows a schematic illustration of a third example of an internal combustion engine system in a side view;
- Figure 4:: shows a schematic illustration of a fourth example of an internal combustion engine system in a first side view and a detail of the second piping unit in a second side view.

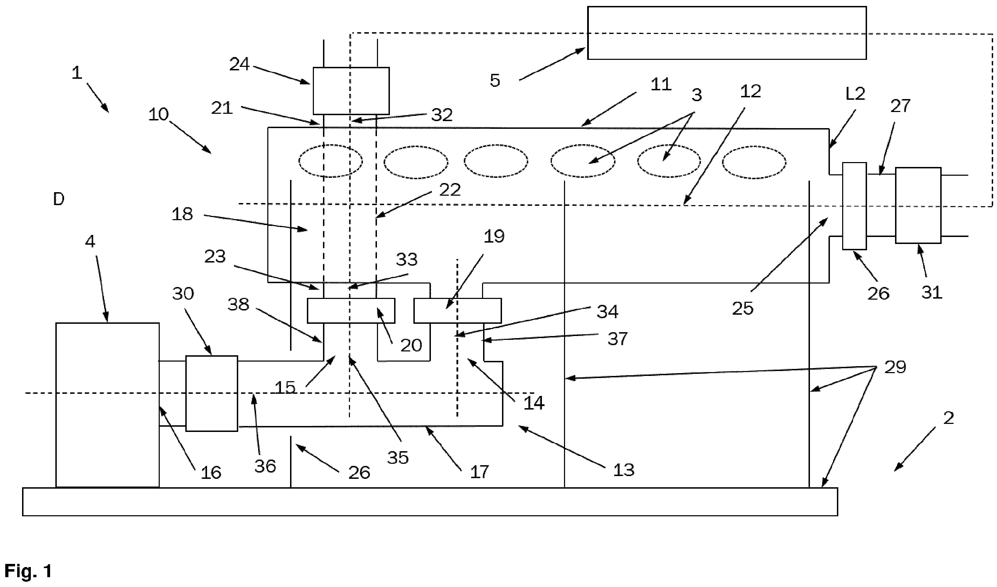

Figure 1 shows a schematic illustration of a first example of an internal combustion engine system 1 in a side view.

The internal combustion engine system 1 comprises an internal combustion engine 2 having six cylinders (not explicitly shown in the figures) generating exhaust gas, a turbocharger 4, a NO_{X} reduction unit 5 and an exhaust gas receiver 10.

The exhaust gas receiver 10 comprises a receiver housing 11 for receiving the exhaust gas via exhaust inlets 3. The receiver housing 11 has a longitudinal axis 12.

The NO_{X} reduction unit 5 basically is arranged in parallel to the receiver housing 11.

The exhaust gas receiver 10 comprises a guiding arrangement 13 for controlling the exhaust gas prior to entering the turbocharger 4.

The guiding arrangement 13 comprises a first inlet 14 for establishing a fluid communication with the receiver housing 11, a second inlet 15 for establishing a fluid communication with the NO_{X} reduction unit 5, an outlet 16 for establishing a fluid communication with the turbocharger 4 and a first piping unit 17 connecting the first inlet 14, the second inlet 15 and the outlet 16.

A second piping unit 18 provides for establishing a fluid communication between the NO_{X} reduction unit 5 and the second inlet 15. The second piping unit 18 is partly arranged in the receiver housing 11.

The guiding arrangement 13 comprises a bypass valve 19 for closing and opening the first inlet 14. The bypass valve 19 is arranged in a first pipe 37 between the receiver housing 11 and the first inlet 14.

The guiding arrangement 13 comprises a first reactor valve 20 for closing and opening the second inlet 15. The first reactor valve 20 is arranged a second pipe 38 the between the second piping unit 18 and the second inlet 15 and between the receiver housing 11 and the second inlet 15.

The receiver housing 11 comprises a housing outlet 25 for establishing a fluid communication with the NO_{X} reduction unit 5 by an outlet pipe 27 connected to the housing outlet 25. A second reactor valve 26 for closing and opening the housing outlet 25 is arranged downstream the housing outlet 25 in the outlet pipe 27.

In this example the housing outlet 25 is arranged in a second lateral end l2 of the receiver housing 11.

Exhaust gas may leave the receiver housing 11 via the outlet pipe 27 and/or via the first pipe 37. By setting the bypass valve 19 and the second reactor valve 26 the amount of exhaust gas being guided to the turbocharger directly or via the NO_{X} reduction unit 5 can be controlled.

In case the complete exhaust gas is guided to the turbocharger 4 directly, the first reactor valve 20 and the second reactor valve 26 are closed, while the bypass valve 19 is open.

In case the complete exhaust gas is guided to the turbocharger 4 via the NO_{X} reduction unit 5, the first reactor valve 20 and the second reactor valve 26 are opened, while the bypass valve 19 is closed.

Alternatively, a part of the exhaust gas is guided to the turbocharger 4 directly and a part of the exhaust gas is guided to the turbocharger 4 via the NO_{X} reduction unit 5. In this case, the first reactor valve 20, the second reactor valve 26 and the bypass valve 19 are at least partly open.

The exhaust gas receiver 10 forms a unit which is mounted to the engine frame 29.

The exhaust gas receiver 10 is decoupled form other parts of the combustion engine system 1 by compensating elements 24, 30, 31.

The first piping unit 17 is mounted to a flex connection 26 connecting the receiver housing 11 to an engine frame 29.

A first compensating element 24 and a third compensating element 31 are arranged between the exhaust gas receiver 10 and the NOₓ reduction unit 5.

An entering piping part 21 of the second piping unit 18 comprises the first compensating element 24.

The first piping unit 17 comprises a second compensating element 30, which arranged next to the outlet 16, and which is arranged between the exhaust gas receiver 10 and the turbocharger 4.

The first inlet 14 comprises a first inlet axis 34 and the second inlet 15 comprises a second inlet axis 35. The first inlet axis 34 is the longitudinal axis of the first pipe 37 and the second inlet axis 35 is the longitudinal axis of the second pipe 38.

The first inlet axis 34 and the second inlet axis 35 are arranged in parallel and perpendicular to the longitudinal axis 12 of the receiver housing 11.

The outlet 16 comprises an outlet axis 36, which is the longitudinal axis of the first piping unit 17.

The outlet axis 36 is arranged perpendicular to the first inlet axis 34 and the second inlet axis 35.

This arrangement provides for a stability of the guiding arrangement 13, which may be positioned close to the recover housing 11 and at the same time may provide for a short flow way to turbocharger 4.

The second piping unit 18 comprises an entering piping part 21, which enters the receiver housing 11, a crossing piping part 22, which is arranged in the receiver housing 11 and a leaving piping part 23, which leaves the receiver housing 11.

The entering piping part 21 comprises an entering piping part axis 32 and the leaving piping part 23 comprises and leaving piping part axis 33.

Principally, there are several possibilities for connecting the exhaust receiver 10 with the NO_{X} reduction unit 5 and the turbocharger 4.

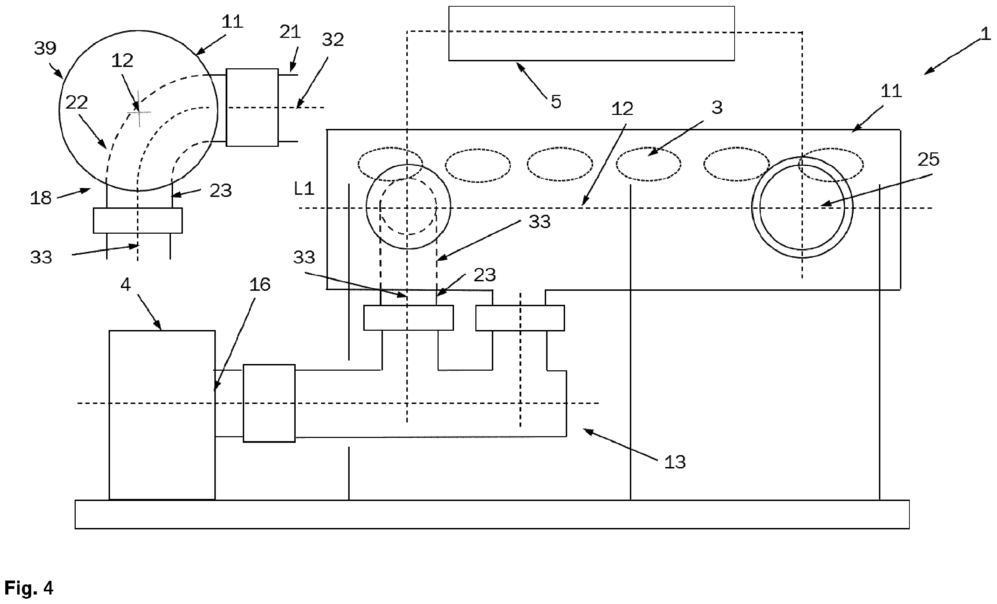

In this example, the housing outlet 25 is arranged in second lateral end L2 of the receiver housing 11 while the entering piping part 21 enters the receiver housing 11 through the jacket 39 (see figure 4). The leaving piping part 23 leaves the receiver housing 11 through the jacket 39 (see figure 4).

The second inlet 15 is closer to the outlet 16 than the first inlet 14.

In this example, the crossing piping part 22 is straight, such that the entering piping part axis 32 and the leaving piping part axis 33 include an angle of 180°.

The crossing piping part 22 runs through the longitudinal axis 12 of the receiver housing 11.

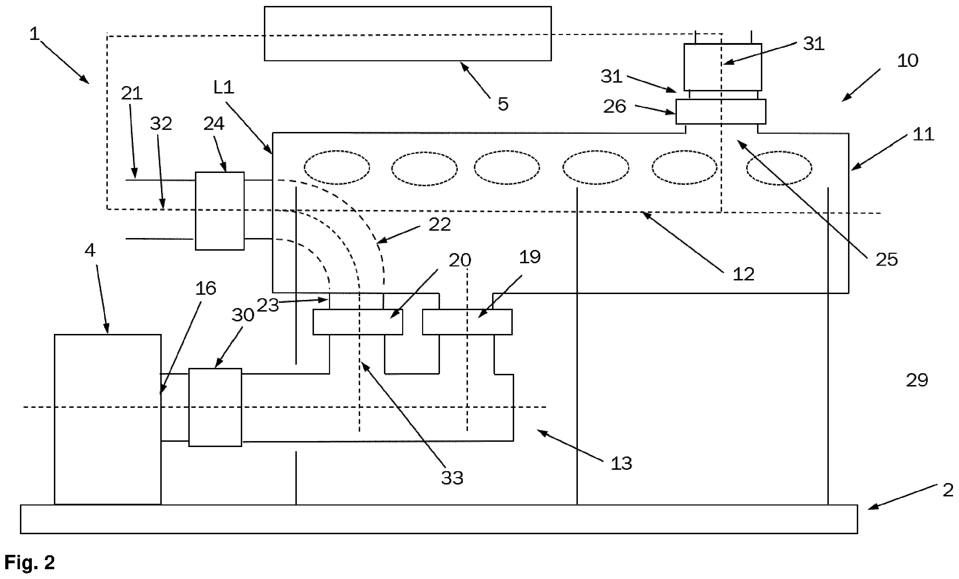

Figure 2 shows a schematic illustration of a second example of an internal combustion engine system 1 in a side view.

In this example, the housing outlet 25 is arranged in the jacket 39 (see figure 4) of the receiver housing 11 while the entering piping part 21 enters the receiver housing 11 through a first lateral end L1. The leaving piping part 23 leaves the receiver housing 11 through the jacket 39 (see figure 4).

The entering piping part axis 32 and the leaving piping part axis 33 include an angle of 90°, while the crossing piping part 22 still runs through the longitudinal axis 12 of the receiver housing 11.

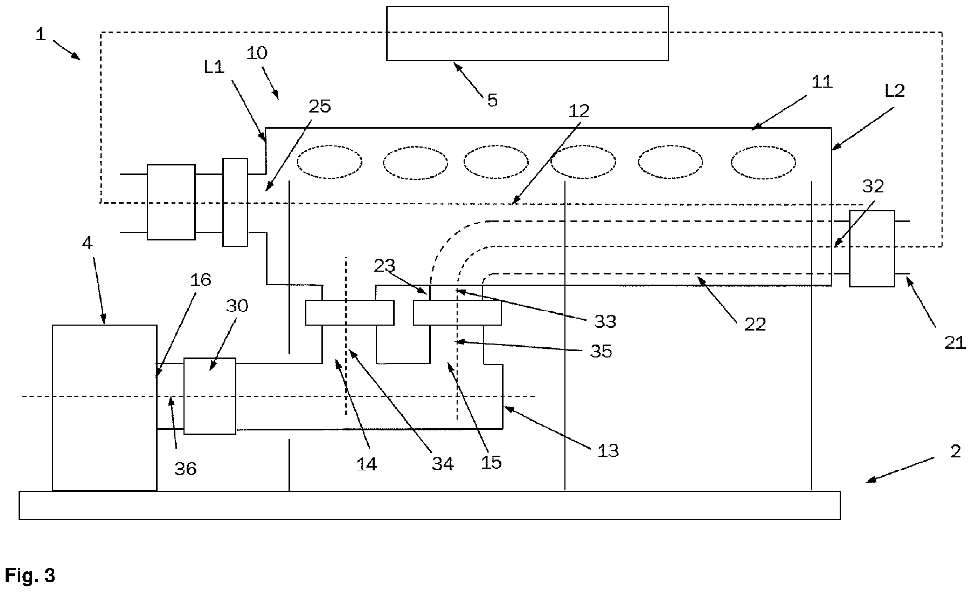

Figure 3 shows a schematic illustration of a third example of an internal combustion engine system 1 in a side view.

In this example, the housing outlet 25 is arranged in the first lateral end L1 of the receiver housing 11 while the entering piping part 21 enters the receiver housing 11 through opposing the second lateral end L2.

The leaving piping part 23 leaves the receiver housing 11 through the jacket 39 (see figure 4).

The first inlet 14 is closer to the outlet 16 than the second outlet 15.

In this case, the entering piping part axis 32 and the leaving piping part axis 33 include an angle of 90°, while the crossing piping part 22 partly runs parallel to the longitudinal axis 12 of the receiver housing 11.

Figure 4 shows a schematic illustration of a fourth example of an internal combustion engine system 1 in a first side view (big figure) and the second piping unit 18 in a second side view (small figure top left).

In this example, the housing outlet 25 is arranged in the jacket 39 of the receiver housing 11. The entering piping part 21 enters the receiver housing 11 through the jacket 39 and the leaving piping part 23 leaves the receiver housing 11 through the jacket 39.

In this case, the entering piping part axis 32 and the leaving piping part axis 33 include an angle of 90° (see second side view), while the crossing piping part 22 partly runs through the longitudinal axis 12 of the receiver housing 11.

## Claims

1. An exhaust gas receiver (10) for an internal combustion engine system (1) comprising an internal combustion engine (2) with at least one cylinder generating exhaust gas, a turbocharger (4) and a NO_{X} reduction unit (5),
the exhaust gas receiver (10) comprising
- a receiver housing (11) for receiving the exhaust gas having a longitudinal axis (12), and
- a guiding arrangement (13) for controlling the exhaust gas prior to entering the turbocharger (4),
the guiding arrangement (13) comprising:
- a first inlet (14) for establishing a fluid communication with the receiver housing (11),
- a second inlet (15) for establishing a fluid communication with the NO_{X} reduction unit (5),
- an outlet (16) for establishing a fluid communication with the turbocharger (4),
- a first piping unit (17) connecting the first inlet (14), the second inlet (15) and the outlet (16),
- **characterized in that** the exhaust gas receiver (10) further comprises a second piping unit (18) for establishing a fluid communication between the NO_{X} reduction unit (5) and the second inlet (15), which second piping unit (18) is at least partly arranged in the receiver housing (11).

2. The exhaust gas receiver according to claim 1, wherein the guiding arrangement comprises a bypass valve (19) for closing and opening the first inlet (14), which bypass valve (19) preferably is arranged between the receiver housing (11) and the first inlet (14).

3. The exhaust gas receiver according to claim 1 or 2, wherein the guiding arrangement comprises a first reactor valve (20) for closing and opening the second inlet (15), which first reactor valve (20) preferably is arranged the between the second piping unit (18) and the second inlet (15) and preferably between the receiver housing (11) and the second inlet (15).

4. The exhaust gas receiver according to one of the preceding claims, wherein the first inlet (14) comprises a first inlet axis (34) and the second inlet (15) comprises a second inlet axis (35), where in the first inlet axis (34) and the second inlet axis (35) are arranged in parallel and preferably perpendicular to the longitudinal axis (12) of the receiver housing (11)

5. The exhaust gas receiver according to claim 4, wherein the outlet (16) comprises an outlet axis (36) and the outlet axis (36) is arranged perpendicular to the first inlet axis (34) and the second inlet axis (35).

6. The exhaust gas receiver according to one of the preceding claims, wherein the second piping unit (18) comprises an entering piping part (21), which enters the receiver housing (11), a crossing piping part (22), which is arranged in the receiver housing (11) and a leaving piping part (23), which leaves the receiver housing (11).

7. The exhaust gas receiver according to claim 6 wherein the entering piping part (21) comprises an entering piping part axis (32) and the leaving piping part (23) comprises and leaving piping part axis (33) and wherein the entering piping part axis (32) and the leaving piping part axis (33) include an angle, which angle is between 90° and 180°.

8. The exhaust gas receiver according to claim 6 or 7, wherein the crossing piping part (22) runs through the longitudinal axis (12) of the receiver housing.

9. The exhaust gas receiver according to one of the preceding claims, wherein the second piping unit (18), in particular an entering piping part (21), comprises a first compensating element (24).

10. The exhaust gas receiver according to one of the preceding claims, wherein the first piping unit (17) comprises a second compensating element (30), which arranged next to the outlet (16).

11. The exhaust gas receiver according to one of the preceding claims, wherein the receiver housing (11) comprises a housing outlet (25) for establishing a fluid communication with the NO_{X} reduction unit (5) by an outlet pipe (27) connected to the housing outlet (25),
and the exhaust gas receiver preferably comprises a second reactor valve (26) for closing and opening the housing outlet (25).

12. The exhaust gas receiver according to claim 11, wherein the exhaust gas receiver comprises a third compensating element (31), which is arranged downstream the housing outlet (25).

13. Internal combustion engine system (1) comprising: an internal combustion engine (2) with at least one cylinder (3) generating exhaust gas, a turbocharger (4), a NO_{X} reduction unit (5) for receiving and purifying the exhaust gas, and an exhaust gas receiver (5) according to one of the preceding claims.

14. Internal combustion engine system (1) according to claim 13 wherein the first piping unit (17) is mounted to a flex connection (26) connecting the receiver housing (11) to an engine frame (29).

15. Internal combustion engine system (1) according to one of claims 13-14, wherein the turbocharger (4) is arranged on a driving end (D).

## Patentansprüche

1. Ein Abgassammler (10) für ein Verbrennungsmotorsystem (1), das einen Verbrennungsmotor (2) mit mindestens einem Zylinder, der Abgas erzeugt, einen Turbolader (4) und eine NO_{X}-Reduktionseinheit (5) umfasst, wobei der Abgassammler (10) umfasst ein Sammlergehäuse (11) zur Aufnahme des Abgases mit einer Längsachse (12) und eine Leitanordnung (13) zur Steuerung des Abgases vor dem Eintritt in den Turbolader (4), wobei die Leitanordnung (13) umfasst:
- einen ersten Einlass (14) zum Herstellen einer Fluidverbindung mit dem Sammlergehäuse (11),
- einen zweiten Einlass (15) zum Herstellen einer Fluidverbindung mit der NO_{X}-Reduktionseinheit (5),
- einen Auslass (16) zum Herstellen einer Fluidverbindung mit dem Turbolader (4),
- eine erste Leitungseinheit (17), die den ersten Einlass (14), den zweiten Einlass (15) und den Auslass (16) verbindet,
- **dadurch gekennzeichnet, dass** der Abgassammler (10) ferner eine zweite Leitungseinheit (18) zum Herstellen einer Fluidverbindung zwischen der NO_{X}-Reduktionseinheit (5) und dem zweiten Einlass (15) umfasst, wobei die zweite Rohrleitungseinheit (18) zumindest teilweise im Sammlergehäuse (11) angeordnet ist.

2. Der Abgassammler gemäss Anspruch 1, wobei die Leitanordnung ein Bypassventil (19) zum Schließen und Öffnen des ersten Einlasses (14) umfasst, wobei das Bypassventil (19) vorzugsweise zwischen dem Sammlergehäuse (11) und dem ersten Einlass (14) angeordnet ist.

3. Der Abgassammler gemäss Anspruch 1 oder 2, wobei die Leitanordnung ein erstes Reaktorventil (20) zum Schließen und Öffnen des zweiten Einlasses (15) umfasst, wobei das erste Reaktorventil (20) vorzugsweise zwischen der zweiten Rohrleitungseinheit (18) und dem zweiten Einlass (15) und vorzugsweise zwischen dem Sammlergehäuse (11) und dem zweiten Einlass (15) angeordnet ist.

4. Der Abgassammler gemäss einem der vorstehenden Ansprüche, wobei der erste Einlass (14) eine erste Einlassachse (34) und der zweite Einlass (15) eine zweite Einlassachse (35) umfasst, wobei die erste Einlassachse (34) und die zweite Einlassachse (35) parallel und vorzugsweise senkrecht zur Längsachse (12) des Sammlergehäuses angeordnet sind. (11) angeordnet sind.

5. Der Abgassammler gemäss Anspruch 4, wobei der Auslass (16) eine Auslassachse (36) umfasst und die Auslassachse (36) senkrecht zur ersten Einlassachse (34) und zur zweiten Einlassachse (35) angeordnet ist.

6. Der Abgassammler gemäss einem der vorstehenden Ansprüche, wobei die zweite Rohrleitungseinheit (18) einen in das Sammlergehäuse (11) eintretenden Einlassrohrleitungsteil (21), einen im Sammlergehäuse (11) angeordneten Kreuzungsrohrleitungsteil (22) und einen aus dem Sammlergehäuse (11) austretenden Auslassrohrleitungsteil (23) umfasst.

7. Der Abgassammler gemäss Anspruch 6, wobei der einlaufende Rohrleitungsteil (21) eine einlaufende Rohrleitungsteilachse (32) umfasst und der auslaufende Rohrleitungsteil (23) eine auslaufende Rohrleitungsteilachse (33) umfasst und wobei die einlaufende Rohrleitungsteilachse (32) und die auslaufende Rohrleitungsteilachse (33) einen Winkel einschließen, der zwischen 90° und 180° liegt.

8. Der Abgassammler gemäss Anspruch 6 oder 7, wobei der kreuzende Rohrleitungsabschnitt (22) durch die Längsachse (12) des Sammlergehäuses verläuft.

9. Der Abgassammler gemäss einem der vorstehenden Ansprüche, wobei die zweite Rohrleitungseinheit (18), insbesondere ein Einlassrohrleitungsabschnitt (21), ein erstes Ausgleichselement (24) umfasst.

10. Der Abgassammler nach einem der vorstehenden Ansprüche, wobei die erste Rohrleitungseinheit (17) ein zweites Ausgleichselement (30) umfasst, das neben dem Auslass (16) angeordnet ist.

11. Der Abgassammler gemäss einem der vorstehenden Ansprüche, wobei das Sammlergehäuse (11) einen Sammlerauslass (25) zum Herstellen einer Fluidverbindung mit der NOX-Reduktionseinheit (5) durch ein mit dem Sammlerauslass (25) verbundenes Auslassrohr (27) umfasst, und der Abgassammler vorzugsweise ein zweites Reaktorventil (26) zum Schließen und Öffnen des Sammlerauslasses (25) umfasst.

12. Der Abgassammler gemäss Anspruch 11, wobei der Abgassammler ein drittes Ausgleichselement (31) umfasst, das stromabwärts des Gehäuseauslasses (25) angeordnet ist.

13. Verbrennungsmotorsystem (1), umfassend: einen Verbrennungsmotor (2) mit mindestens einem Zylinder (3), der Abgas erzeugt, einen Turbolader (4), eine NOX-Reduktionseinheit (5) zum Aufnehmen und Reinigen des Abgases und einen Abgassammler (5) gemäss einem der vorstehenden Ansprüche.

14. Verbrennungsmotorsystem (1) nach Anspruch 13, wobei die erste Rohreinheit (17) an einer flexiblen Verbindung (26) angebracht ist, die das Sammlergehäuse (11) mit einem Motorrahmen (29) verbindet.

15. Verbrennungsmotorsystem (1) nach einem der Ansprüche 13-14, wobei der Turbolader (4) an einem Antriebsstrangende (D) angeordnet ist.

## Revendications

1. Récepteur de gaz d'échappement (10) pour un système de moteur à combustion interne (1) comprenant un moteur à combustion interne (2) avec au moins un cylindre générant des gaz d'échappement, un turbocompresseur (4) et une unité de réduction des NO_{X} (5), le récepteur de gaz d'échappement (10) comprenant
- un boîtier de collecteur (11) destiné à recevoir les gaz d'échappement et présentant un axe longitudinal (12),
- et un dispositif de guidage (13) destiné à contrôler les gaz d'échappement avant leur entrée dans le turbocompresseur (4), le dispositif de guidage (13) comprenant :
- une première entrée (14) pour établir une communication fluidique avec le boîtier de récepteur (11),
- une deuxième entrée (15) pour établir une communication fluidique avec l'unité de réduction de NO_{X} (5),
- une sortie (16) pour établir une communication fluidique avec le turbocompresseur (4),
- une première unité de tuyauterie (17) reliant la première entrée (14), la deuxième entrée (15) et la sortie (16),
- **caractérisé en ce que** le récepteur de gaz d'échappement (10) comprend en outre une deuxième unité de tuyauterie (18) pour établir une communication fluidique entre l'unité de réduction de NO_{X} (5) et la deuxième entrée (15), laquelle deuxième unité de tuyauterie (18) est au moins partiellement disposée dans le boîtier récepteur (11).

2. Récepteur de gaz d'échappement selon la revendication 1, dans lequel le dispositif de guidage comprend une vanne de dérivation (19) pour fermer et ouvrir la première entrée (14), laquelle vanne de dérivation (19) est de préférence disposée entre le boîtier du récepteur (11) et la première entrée (14).

3. Récepteur de gaz d'échappement selon la revendication 1 ou 2, dans lequel le dispositif de guidage comprend une première soupape de réacteur (20) pour fermer et ouvrir la deuxième entrée (15), première soupape de réacteur (20) est de préférence disposée entre la deuxième unité de tuyauterie (18) et la deuxième entrée (15) et de préférence entre le boîtier récepteur (11) et la deuxième entrée (15).

4. Récepteur de gaz d'échappement selon l'une des revendications précédentes, dans lequel la première entrée (14) comprend un premier axe d'entrée (34) et la deuxième entrée (15) comprend un deuxième axe d'entrée (35), le premier axe d'entrée (34) et le deuxième axe d'entrée (35) étant disposés parallèlement et de préférence perpendiculairement à l'axe longitudinal (12) du boîtier du récepteur (11)

5. Récepteur de gaz d'échappement selon la revendication 4, dans lequel la sortie (16) comprend un axe de sortie (36) et l'axe de sortie (36) est disposé perpendiculairement au premier axe d'entrée (34) et au deuxième axe d'entrée (35).

6. Récepteur de gaz d'échappement selon l'une des revendications précédentes, dans lequel la deuxième unité de tuyauterie (18) comprend une partie de tuyauterie d'entrée (21), qui entre dans le boîtier du récepteur (11), une partie de tuyauterie de croisement (22), qui est disposée dans le boîtier du récepteur (11), et une partie de tuyauterie de sortie (23), qui sort du boîtier du récepteur (11).

7. Récepteur de gaz d'échappement selon la revendication 6, dans lequel la partie de tuyauterie d'entrée (21) comprend un axe de partie de tuyauterie d'entrée (32) et la partie de tuyauterie de sortie (23) comprend un axe de partie de tuyauterie de sortie (33), et dans lequel l'axe de partie de tuyauterie d'entrée (32) et l'axe de partie de tuyauterie de sortie (33) forment un angle compris entre 90° et 180°.

8. Récepteur de gaz d'échappement selon la revendication 6 ou 7, dans lequel la partie de tuyauterie transversale (22) s'étend à travers l'axe longitudinal (12) du boîtier du récepteur.

9. Récepteur de gaz d'échappement selon l'une des revendications précédentes, dans lequel la deuxième unité de tuyauterie (18), en particulier une partie de tuyauterie d'entrée (21), comprend un premier élément de compensation (24) .

10. Récepteur de gaz d'échappement selon l'une des revendications précédentes, dans lequel la première unité de tuyauterie (17) comprend un deuxième élément de compensation (30) qui est disposé à côté de la sortie (16).

11. Récepteur de gaz d'échappement selon l'une des revendications précédentes, dans lequel le boîtier récepteur (11) comprend une sortie de boîtier (25) pour établir une communication fluidique avec l'unité de réduction de NO_{X} (5) par un tuyau de sortie (27) relié à la sortie de boîtier (25), et le récepteur de gaz d'échappement comprend de préférence une deuxième vanne de réacteur (26) pour fermer et ouvrir la sortie de boîtier (25).

12. Récepteur de gaz d'échappement selon la revendication 11, dans lequel le récepteur de gaz d'échappement comprend un troisième élément de compensation (31), qui est disposé en aval de la sortie du boîtier (25).

13. Système de moteur à combustion interne (1) comprenant : un moteur à combustion interne (2) avec au moins un cylindre (3) générant des gaz d'échappement, un turbocompresseur (4), une unité de réduction des NO_{X} (5) pour recevoir et purifier les gaz d'échappement, et un récepteur de gaz d'échappement (5) selon l'une des revendications précédentes.

14. Système de moteur à combustion interne (1) selon la revendication 13, dans lequel la première unité de tuyauterie (17) est montée sur un raccord flexible (26) reliant le boîtier de réception (11) à un châssis de moteur (29).

15. Système de moteur à combustion interne (1) selon l'une des revendications 13 à 14, dans lequel le turbocompresseur (4) est disposé sur une extrémité d'entraînement (D).
